# EUROPEAN PATENT APPLICATION

(11) **EP 3 264 345 A1**
(43) Date of publication of application: **03.01.2018**
(21) Application number: 17176343.6
(22) Date of filing: 16.06.2017
(51) Int. Cl.: G06Q 10/08

(54) **METHOD AND SYSTEM FOR CALCULATING A PRICE OF TRANSPORTING A CONSIGNMENT**

(30) Priority: 28.06.2016 NL 2017058
(71) Applicant: TNT Holdings B.V., 2132 LS Hoofddorp (NL)
(72) Inventor: Holleman, Pieter, 2132 LS Hoofddorp (NL); Ree, Maarten Sicco Dirk, 2132 LS Hoofddorp (NL); McLoughlin, Niall, 2132 LS Hoofddorp (NL)
(74) Representative: De Vries & Metman

(57) **Abstract**

The invention relates to a method which involves receiving a request from a customer to transport a consignment, calculating a first price of the transport based on an origin location, a destination location and indicated characteristics of the consignment, providing the first price to the customer, and allowing the customer to accept an offer to transport the consignment for the first price. The method further involves a measurement system determining a weight, a size and/or a shape of the consignment, calculating a second price of the transport based on the origin location and the destination location and based on the weight, the size and/or the shape of the consignment, and transmitting a notification to the customer if the first price and the second price have at least a certain difference.

## Description

### Field of the invention

*The* invention relates to a method of calculating a price of transporting a consignment.

The invention further relates to a system for calculating a price of transporting a consignment.

The invention also relates to a computer program product enabling a computer system to perform such a method.

### Background of the invention

Shipping companies commonly allow their customers to request shipment of a consignment via an e-commerce environment, e.g. via a website or application running on a mobile device. Such an e-commerce tool commonly allows a user to indicate an origin location, a destination location and one or more characteristics of the consignment, e.g. the weight of the consignment. The e-commerce environment then provides a price to the customer for which the shipping company is willing to ship the consignment. If the customer would accept the provided price, he would be able to arrange pickup of the consignment at the origin location via the e-commerce tool.

After the consignment has been picked up at the origin location, someone at the shipping company weighs the consignment. This weight is registered in a database. After the consignment has been delivered to the recipient, an invoice is sent to the customer. If the measured weight is higher than the weight indicated by the customer, the measured weight is used to determine the amount that is invoiced.

A drawback of the existing method of invoicing is that the customer is informed relatively late that shipping the consignment will be more expensive than previously indicated in the e-commerce environment.

### Summary of the invention

It is a first object of the invention to provide a method of calculating a price of transporting a consignment, which informs a customer relatively early of changes in the cost of shipping the consignment.

It is a second object of the invention to provide a system for calculating a price of transporting a consignment, which informs a customer relatively early of changes in the cost of shipping the consignment.

According to the invention, the first object is realized in that the method of calculating a price of transporting a consignment comprises the steps of receiving a request from a customer to transport a consignment from an origin location to a destination location, said request comprising one or more indicated characteristics of said consignment, calculating a first price of said transport based on at least said origin location, said destination location and at least one of said one or more indicated characteristics of said consignment, providing said first price to said customer, allowing said customer to accept an offer to transport said consignment for said first price, a measurement system determining one or more measured characteristics of said consignment, said measured characteristics comprising a weight, a size and/or a shape of said consignment, a processor calculating a second price of said transport based on at least said origin location, said destination location and at least one of said one or more measured characteristics of said consignment, and transmitting a notification to said customer if said first price and said second price have at least a certain difference. Said method may be performed by software running on a programmable device. This software may be provided as a computer program product.

The inventors have recognized that by using a measurement system to verify the characteristics indicated by the customer in his request and to notify the customer of the change in price if the difference between the indicated characteristics and the measured characteristics results or would result in a different, e.g. higher, price of transporting the consignment, the customer may be informed relatively early of a higher price. This allows the customer to request the shipping company to stop the transport or to hold the transport until the new price has been discussed if desired.

The notification transmitted to the customer may comprise the second price. The notification may be transmitted if the second is price is at least a certain amount higher than the first price or if the second price is at least a certain amount higher or at least a certain amount lower than the first price, for example. The certain amount may be a very small amount. For example, the notification may be transmitted if the second price exceeds the first price by any amount. The notification may be transmitted by SMS message, chat message, e-mail, notification message on a website, notification message delivered through an Application Program Interface and/or notification message in an application.

The method may further comprise the step of said measurement system capturing one or more images of said consignment and the step of allowing said customer to view at least one of said one or more images of said consignment. This allows the user to verify that the consignment whose weight, size and/or shape were measured is indeed his consignment and was in a state in which he offered it for transport during the measurement(s).

The step of said measurement system capturing one or more images of said consignment may comprise said measurement system capturing a plurality of images from different positions. This enables the customer to get a better look at the consignment whose weight, size and/or shape were measured than when only a single image from a single position/angle is capture. The plurality of images from different positions may form a 360-degree view.

The method may further comprise the step of indicating at least one of said weight, said size and said shape of said consignment to said customer. This allows the customer to find out why the second price is different from, e.g. higher than, the first price, e.g. whether the weight was higher than indicated or whether a measured size was higher than the assumed average for a certain weight if the size was not indicated by the customer, for example.

The method may further comprise the step of allowing said customer to stop said transport of said consignment. If the second price is much higher than the first price and the cost of returning the consignment is relatively low, e.g. because the consignment is still at the origin depot, it may be beneficial for the customer to stop the transport and use a different shipping company to transport the consignment.

The step of receiving a request from a customer to transport a consignment may comprise receiving said request on a website and/or in an application and the step of allowing said customer to accept an offer to transport said consignment for said first price comprises allowing said customer to accept said offer on said website and/or in said application. Although it may also be possible arrange the transport of a consignment by phone or in person, use of an application or website in an e-commerce environment is often quicker.

The method may further comprise the step of informing said customer that said transport of said consignment is going to be charged at said second price. The customer may always be informed of the second price after it has been calculated or only if the first price and the second price have at least the certain difference, for example. The customer may be informed of the second price in the notification message, on the website and/or the application, for example. When a customer is already able to arrange transport of his consignment in a website and/or application, it may be beneficial to allow the customer to be informed of the second price in the same application and/or on the same website. On a website and/or in an application, functionality can be offered that may not be possible to realize with an SMS message or e-mail, e.g. accepting an offer at the second price, stopping transport of the consignment and/or viewing a 360-degree view of the consignment.

*The* method may further comprise the step of said measurement system determining whether said consignment is stackable or not on the basis of said measured shape of said consignment and the step of said processor calculating said second price of said transport may comprise said processor calculating said second price based on at least said origin location, said destination location and whether said consignment is determined to be stackable or not. Stackable consignments may be cheaper to transport for a shipping company and if a customer indicates that his consignment is stackable while it is not, the shipping company may want to charge a higher price.

The method may further comprise the step of a processor comparing at least one of said measured characteristics of said consignment with at least one corresponding indicated characteristic of said consignment and the step of said processor calculating said second price of said transport may be either performed or not performed in dependence on a result of said comparison. It may sometimes be more efficient, e.g. save computing and/or network resources, to avoid calculating the second price if it is not necessary. It may sometimes be possible to determine that the second price is not going to be different from, e.g. higher than, the first price by just comparing indicated characteristics with measured characteristics. For example, a measured weight may be determined to be less than a certain amount higher than an indicated weight.

According to the invention, the second object is realized in that the system for calculating a price of transporting a consignment comprises a customer interface system, a measurement system configured to determine one or more measured characteristics of a consignment, said measured characteristics comprising a weight, a size and/or a shape of said consignment, and at least one processor configured to use said customer interface system to receive a request from a customer to transport a consignment from an origin location to a destination location, said request comprising one or more indicated characteristics of said consignment, to calculate a first price of said transport based on at least said origin location, said destination location and at least one of said one or more indicated characteristics of said consignment, to use said customer interface system to provide said first price to said customer and to allow said customer to accept an offer to transport said consignment for said first price, to calculate a second price of said transport based on at least said origin location, said destination location and at least one of said one or more measured characteristics of said consignment, and to use said customer interface system to transmit a notification to said customer if said first price and said second price have at least a certain difference.

Said at least one processor may be configured to transmit said notification to said customer by SMS message, chat message, e-mail, notification message on a website, notification message delivered through an Application Program Interface and/or notification message in an application.

Said measurement system may be further configured to capture one or more images of said consignment and said at least one processor may be further configured to use said customer interface system to allow said customer to view at least one of said one or more images of said consignment.

Said measurement system may be configured to capture a plurality of images from different positions.

Said at least one processor may be further configured to use said customer interface system to indicate at least one of said weight, said size and said shape of said consignment to said customer.

Said at least one processor may be further configured to use said customer interface system allow said customer to stop said transport of said consignment.

Said at least one processor may be configured to receive said request and to accept said offer to transport said consignment for said first price on a website and/or in an application.

Said at least one processor may be configured to inform said customer that said transport of said consignment is going to be charged at said second price, e.g. in the notification message, on the website and/or in the application.

Said measurement system or said at least one processor may be further configured to determine whether said consignment is stackable or not on the basis of said measured shape of said consignment and said at least one processor may be configured to calculate said second price based on at least said origin location, said destination location and whether said consignment is determined to be stackable or not.

Said at least one processor may be configured to compare at least one of said measured characteristics of said consignment with at least one corresponding indicated characteristic of said consignment and to either calculate or not calculate said second price of said transport in dependence on a result of said comparison.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations comprising: receiving a request from a customer to transport a consignment from an origin location to a destination location, said request comprising one or more indicated characteristics of said consignment, calculating a first price of said transport based on at least said origin location, said destination location and at least one of said one or more indicated characteristics of said consignment, providing said first price to said customer, allowing said customer to accept an offer to transport said consignment for said first price, determining one or more measured characteristics of said consignment, said measured characteristics comprising a weight, a size and/or a shape of said consignment, calculating a second price of said transport based on at least said origin location, said destination location and at least one of said one or more measured characteristics of said consignment, and transmitting a notification to said customer if said first price and said second price have at least a certain difference.

As will be appreciated by one skilled in the art, aspects of the present invention may be embodied as a system, a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the Drawings

These and other aspects of the invention are apparent from and will be further elucidated, by way of example, with reference to the drawings, in which:
- Fig.1 depicts an example of a transport network in which the system of the invention may be used;
- Fig.2 is a block diagram of an embodiment of the system of the invention;
- Fig.3 is a flow diagram of a first embodiment of the method of the invention;
- Fig.4 is a flow diagram of a second embodiment of the method of the invention;
- Fig.5 illustrates a first user interface provided by the method of Fig.4;
- Fig.6 illustrates a second user interface provided by the method of Fig.4;
- Fig.7 depicts a first embodiment of a measurement system for non-conveyable consignments;
- Fig.8 depicts a second embodiment of a measurement system for non-conveyable consignments;
- Fig.9 depicts the measurement system of Fig.8 while scanning a first object in a first direction;
- Fig.10 depicts the measurement system of Fig.8 while scanning the first object in a second direction;
- Fig.11 depicts the measurement system of Fig.8 while scanning a second object in a first direction;
- Fig.12 depicts the measurement system of Fig.8 after the scanning of the second object is complete;
- Fig.13 depicts a third embodiment of a measurement system for conveyable consignments; and
- Fig.14 is a block diagram of an exemplary data processing system for performing the method of the invention.

Corresponding elements in the drawings are denoted by the same reference numeral.

### Detailed description of the Drawings

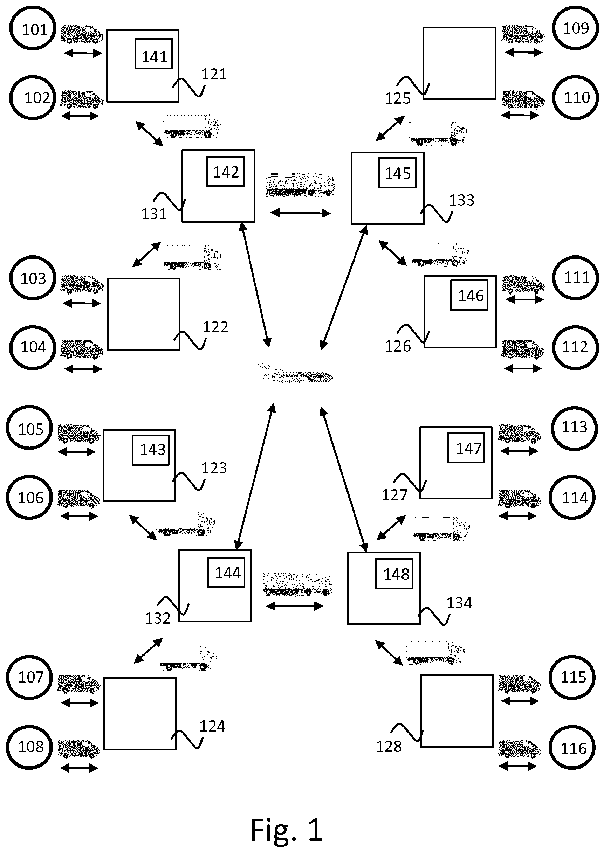

**Fig.1** depicts an example of a transport network in which the system of the invention may be used. Pickup and Delivery (PUD) vehicles, e.g. vans and/or trucks, pick up consignments from and deliver consignments to addresses **101-116.** Consignments collected at addresses **101** and **102** are transported to hub **121** and consignments with addresses **101** and **102** as destination are delivered to their destination from this hub **121.** Consignments collected at addresses **103** and **104** are transported to hub **122** and consignments with addresses **103** and **104** as destination are delivered to their destination from this hub **122.** Consignments collected at addresses **105** and **106** are transported to hub **123** and consignments with addresses **105** and **106** as destination are delivered to their destination from this hub **123.** Consignments collected at addresses **107** and **108** are transported to hub **124** and consignments with addresses **107** and **108** as destination are delivered to their destination from this hub **124.**

Consignments collected at addresses **109** and **110** are transported to hub **125** and consignments with addresses **109** and **110** as destination are delivered to their destination from this hub **125.** Consignments collected at addresses **111** and **112** are transported to hub **126** and consignments with addresses **111** and **112** as destination are delivered to their destination from this hub **126.** Consignments collected at addresses **113** and **114** are transported to hub **127** and consignments with addresses **113** and **114** as destination are delivered to their destination from this hub **127.** Consignments collected at addresses **115** and **116** are transported to hub **128** and consignments with addresses **115** and **116** as destination are delivered to their destination from this hub **128.**

Consignments are transported to and from hubs **121** and **122** via a gateway **131.** Consignments are transported to and from hubs **123** and **124** via a gateway **132.** Consignments are transported to and from hubs **125** and **126** via a gateway **133.** Consignments are transported to and from hubs **127** and **128** via a gateway **134.** Consignments are transported between gateways **131** and **133** and between gateways **132** and **134** by truck. Consignments are transported between gateways **131** and **132**, between gateways **131** and **134**, between gateways **133** and **132** and between gateways **133** and **134** by plane.

For example, when a consignment is shipped from address **101** to address **116**, it is first picked up at address **101** and transported to hub **121** by van or truck. It is then transported from hub **121** to gateway **131** by truck. From gateway **131**, the consignment is transported from gateway **131** to gateway **134** by plane, from where it is transported to hub **128** by truck. From hub **128**, the consignment is delivered to address **116** by van or truck.

Measurement systems configured to determine the weight, size and/or shape of consignments may be located at all or some of the hubs **121-128** and/or at some or all of the gateways **131-134**. In the example shown in **Fig.1**, measurement systems **141-148** are located at hubs **121**, **123**, **126**, and **127** and at gateways **131-134**. For example, when a consignment is shipped from address **101** to address **116**, its weight, size and/or shape are first determined at measurement system **141**, then determined a second time at measurement system **142** and finally determined a third time at measurement system **148**.

Is it beneficial to determine the weight, size and/or shape of consignments at all the depots, as this allows all the customers to be informed as soon as possible. However, not all depots may possess a measurement system. By having measurement systems at all the hubs, all customers may still be informed relatively early. For example, when a consignment is shipped from address **103** to address **116**, its weight, size and/or shape are determined for the first time at measurement system **142** at hub **131**.

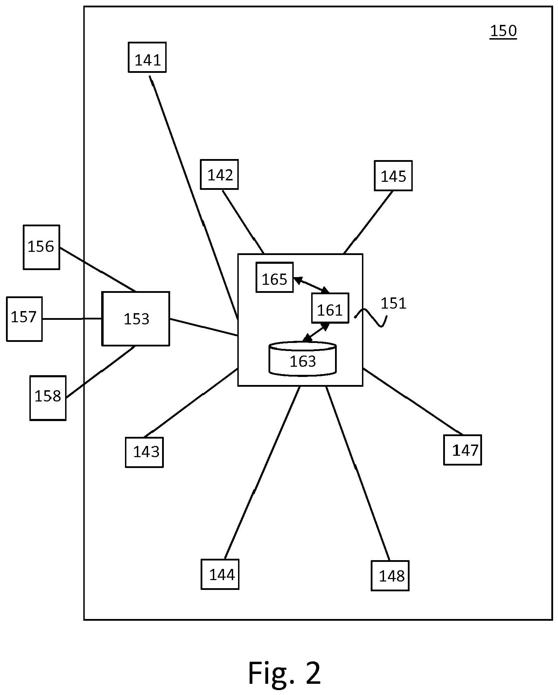

An embodiment of the system for calculating a price of transporting a consignment is shown in **Fig. 2****.** The system **150** comprises a customer interface system **153**, measurement systems **141-148** and a server **151** with a processor **161**. The measurement system **141-148** is configured to determine one or more measured characteristics of a consignment, the measured characteristics comprising a weight, a size and/or a shape of the consignment. The processor **161** is configured to use the customer interface system **153** to receive a request from a customer to transport a consignment from an origin location to a destination location. The request comprises one or more indicated characteristics of the consignment. The processor **161** is further configured to calculate a first price of the transport based on at least the origin location, the destination location and at least one of the one or more indicated characteristics of the consignment and to use the customer interface system **153** to provide the first price to the customer and to allow the customer to accept an offer to transport the consignment for the first price. The processor **161** is further configured to calculate a second price of the transport based on at least the origin location, the destination location and at least one of the one or more measured characteristics of the consignment, and to use the customer interface system **153** to transmit a notification to the customer if the first price and the second price have at least a certain difference, e.g. any difference, any price increase or an increase in price of more than a certain percentage.

The server **151** further comprises storage means **163** and a communication interface **165.** The measurement systems **141-148** transmit data determined/measured by them to the server **151**, e.g. using the FTP protocol, and the processor **161** then stores the data on the storage means **163.** The processor **161** then uses the stored information at the appropriate time, e.g. immediately after (notification of) receipt.

The customer interface system **153** is accessed by client devices **156-158.** A client device **156-158** may comprise a mobile phone, a tablet or a PC, for example. The customer interface system **153** may comprise a web server and/or may communicate with the client devices **156-158** via another protocol than HTTP. The customer interface system **153** may communicate with an application installed on a client device **156-158**, e.g. an application downloaded from an app store from Google or Apple. The customer interface system **153** is used to provide an E-commerce environment, i.e. to communicate with senders and recipients and to provide them with information on consignments (to be) shipped or (to be) received by them. The customer interface system **153** transmits notifications to the client devices **156-158**, e.g. via application notifications, via SMS/MMS messages or via chat messages. Alternatively or additionally, these notifications may be delivered through an Application Program Interface (API), e.g. an API of software executing on the customer interface system **153**. For example, an entity other than the shipping company may have its own web site or application to present these notifications to users.

The server **151** and the customer interface system **153** may run a Windows and/or Unix (or Unix-like) operating system, for example. An Apache HTTP server or another HTTP server may be installed on the customer interface system **153**, for example. The processor **161** may comprise an Intel or AMD processor, for example. The storage means **163** may comprise multiple storage components. The storage means **163** may comprise solid-state (e.g. RAM or flash), optical and/or magnetic storage means, for example. The server **151** may comprise other components typical for a server, e.g. a power supply. The communication interface **165** may comprise a wireless and/or wired network interface, e.g. Ethernet or WiFi. The communication interface **165** may comprise multiple hardware components. In the embodiment shown in **Fig.2**, the processor **161** is part of a separate server **151**. In an alternative embodiment, part of or all of the processing performed by the processor **161** may be performed by one or more processors that are part of the customer interface system **153**.

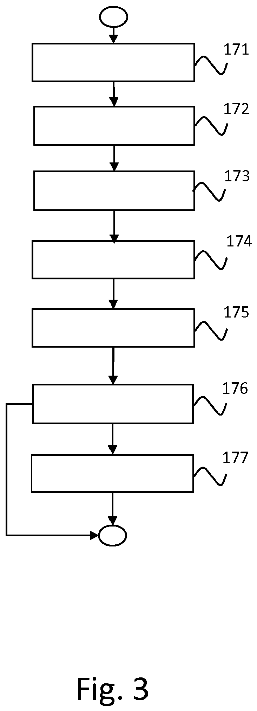

A first embodiment of the method of calculating a price of transporting a consignment is shown in **Fig. 3****.** A step **171** comprises receiving a request from a customer to transport a consignment from an origin location to a destination location, e.g. on a website or from a downloadable application distributed by a shipping company. The request comprises one or more indicated characteristics of the consignment. A step **172** comprises calculating a first price of the transport based on at least the origin location, the destination location and at least one of the one or more indicated characteristics of the consignment. A step **173** comprises providing the first price to the customer. A step **174** comprises allowing the customer to accept an offer to transport the consignment for the first price. The customer may be able to pay online or may be able to charge the cost of transport to an account, for example.

*A* step **175** comprises a measurement system determining one or more measured characteristics of the consignment. The measured characteristics comprise a weight, a size and/or a shape of the consignment. A step **176** comprises a processor calculating a second price of the transport based on at least the origin location, the destination location and at least one of the one or more measured characteristics of the consignment. A step **177** comprises transmitting a notification to the customer if the first price and the second price have at least a certain difference, e.g. by SMS message, chat message, e-mail, notification message on a website, notification message delivered through an Application Program Interface and/or notification message in an application.

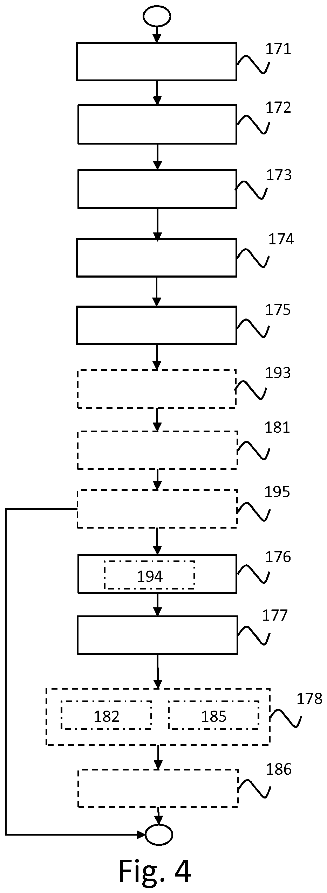

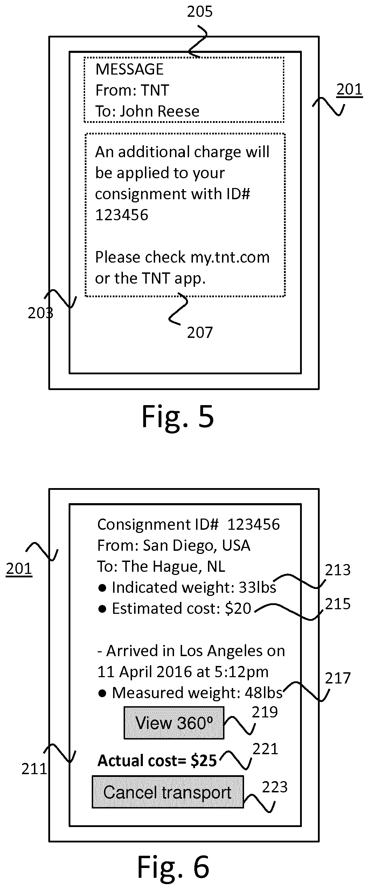

An example of such a notification is shown in **Fig.5****.** A mobile device **201** shows a notification message on a screen **203.** The message comprises a header **205** and a body **207.** The header **205** shows that the message was sent from the shipping company to the customer. The body **207** informs the customer that an additional charge will be applied to his consignment with ID #123456 and asks the customer to visit a certain website or open a certain application to get more information. In the example shown in **Fig.5****,** the second price is not included in the notification message and might, in another embodiment than the one shown in **Fig.4**, not have been calculated yet when step **177** is performed.

*A* second embodiment of the method of determining a difference in a consignment is shown in **Fig. 4****.** The second embodiment extends the first embodiment. Some of the steps may be performed in a different order (including in parallel instead of in sequence or in sequence instead of in parallel) in an alternative embodiment.

A step **193** is performed after the one or more measured characteristics have been determined by the measurement system in step **175.** Step **193** comprises the measurement system determining whether the consignment is stackable or not on the basis of the measured shape of the consignment. Information on whether the consignment is stackable is used in step **194**.

A step **181** is performed after step **193.** Step **181** comprises the measurement system capturing one or more images of the consignment, e.g. a plurality of images from different positions. These one or more images are shown in step **182**.

A step **195** is performed after step **181.** Step **195** comprises comparing at least one of the measured characteristics of the consignment with at least one corresponding indicated characteristic of the consignment. Step **176** (in which the second price is calculated) is either performed or not performed in dependence on a result of step **195.** If the difference between the measured characteristic(s) and the indicated characteristic(s) would not result in a price increase, then the steps following step **195** are skipped.

Step **194** is an embodiment of step **176** in which the second price is calculated. Step **194** comprises the processor calculating the second price based on at least the origin location, the destination location and whether the consignment is determined to be stackable or not, which has been determined in step **193.** The second price may further be based on the weight, the size and/or the shape of the consignment, for example.

A step **178** is performed after step **177** in which a notification is transmitted to the customer. Step **178** comprises informing the customer that the transport of the consignment is going to be charged at the second price. If the first price and the second price do not have at least a certain difference, step **178** may be skipped.

An example of a user interface provided in step **178** is shown in **Fig.6****.** A mobile device **201** runs an application that provides a screen **211** at a certain moment. The screen **211** is shown after a user has entered consignment ID number "123456" and the postcode of the recipient (the latter ensuring a certain degree of privacy). Screen **211** shows that the consignment with ID# 123456 is being shipped from San Diego, USA to The Hague, Netherlands. Screen **211** further shows that the sender of the consignment has indicated a weight **213** of 33 pounds and was offered a first price **215** of $20 based on the origin location, destination location and indicated weight **213.**

Screen **211** further shows that the consignment arrived in Los Angeles on 11 April 2016 at 5:12 pm, e.g. at a depot or hub, where a measurement system determined its measured weight **217.** The measured weight **217** of the consignment was determined to be 48 pounds. In this example, consignments with a weight between 20 and 40 pounds are charged a first fee and consignments with a weight between 40 and 60 pounds are charged a second, higher fee. Since the measured weight **217** results in a higher fee than the indicated weight **213**, screen **211** informs the sender of the consignment that transport of the consignment is going to be charged at the second fee, i.e. at a second price **221** of $25.

Steps **182** and **185** are performed as part of step **178** in which the customer is informed that the transport of the consignment is going to be charged at the second price. Step **182** comprises allowing the customer to view at least one of the one or more images of the consignment captured in step **181.** In the user interface example of **Fig.6**, a "View 360°" button **219** is shown. When a user presses this button **219**, a plurality of images captured from different positions is shown. The user may be able to change the angle at which he is viewing the consignment. Step **185** comprises indicating at least one of the weight, the size and the shape of the consignment to the customer. For example, a measured weight **217** of consignment #123456 is shown in the user interface example of **Fig.6****.**

In the embodiment shown in **Fig. 4**, steps **178, 182** and **185** are skipped dependent on the outcome of step **195**, e.g. steps **178, 182** and **185** are skipped if the difference between the measured characteristic(s) and the indicated characteristic(s) would not result in a price increase. In an alternative embodiment, steps **182** and **185** are not part of step **178** and/or steps **178, 182** and **185** are performed independent of the outcome of step **195.**

*A* step **186** comprises allowing the customer to stop the transport of the consignment. In the user interface example of **Fig.6**, a "cancel transport" button **223** is shown. A user may want to cancel transport if the second price is not acceptable. The shipping company may charge an amount even if the transport is cancelled and the consignment returned to the sender, but this amount may be relatively small if the consignment is still at the origin depot.

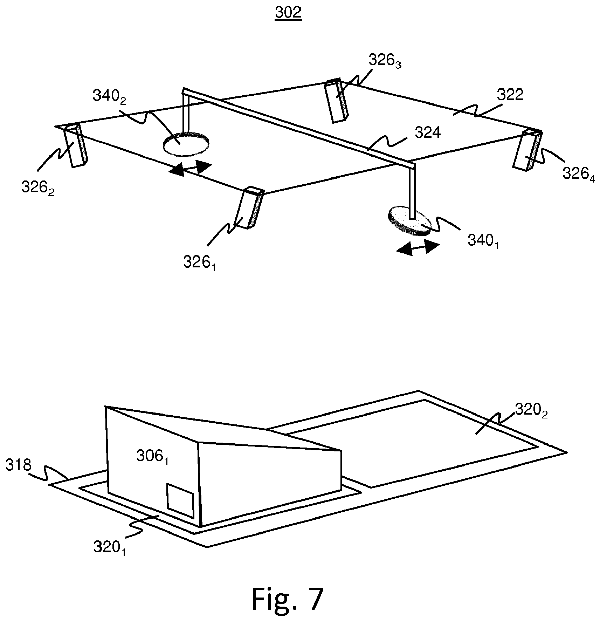

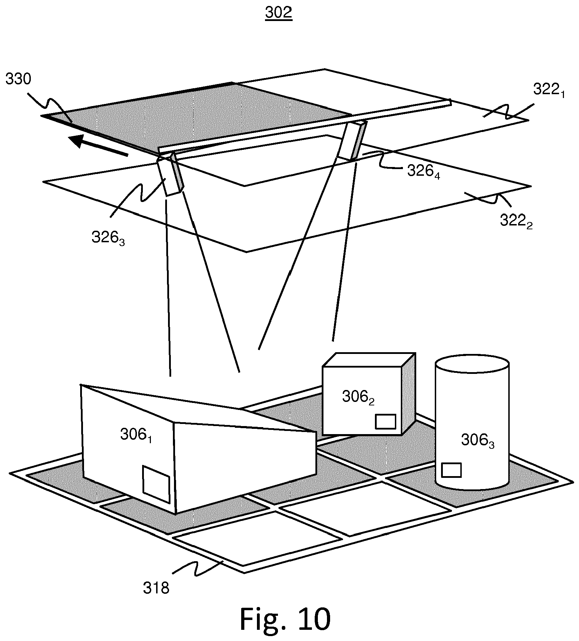

**Figs. 7** to **13** depict three embodiments of a measurement system that may be used with or in the system of the invention.

**Fig. 7** depicts a first embodiment of a Check Weight Cube (CWC) **302** for non-conveyables that is optimized for high throughput processing. A weighing system **318** comprises two electronic scales **320₁** and **320₂**. The electronic scales **320**₁₋₂ are integrated in the floor of a depot such that the surface of the floor matches the top surface of the scales. This way forklifts can mount and demount consignments in a very fast way. A first consignment **306₁** is shown placed in the first measurement area **320₁**.

The volume scanning system **322** comprises four cameras **326₁₋₄**. In this embodiment, the cameras **326₁₋₄** are fixed at the edges of the volume scanning system **322** and are not movable. The cameras **326₁₋₄** are used to create a surround view, e.g. 360 degree view, of the first consignment **306₁**. The cameras **326₁₋₄** may also be used to read markings, e.g. a bar code representing a consignment ID, on the first consignment **306₁**. The volume scanning system **322** comprises a single movable frame **324**. On this movable frame **324**, two (e.g. laser and/or ultrasound) distance measurement devices **340₁₋₂** have been mounted at the ends, i.e. at fixed positions, of the moveable frame **324**. By moving the movable frame **324**, these (e.g. laser and/or ultrasound) distance measurement devices **340₁₋₂** are used to create a point cloud to represent the external surface of the first consignment **306₁**. By analyzing this point cloud, the size, e.g. the volume and/or the dimensions, of the consignment may be determined.

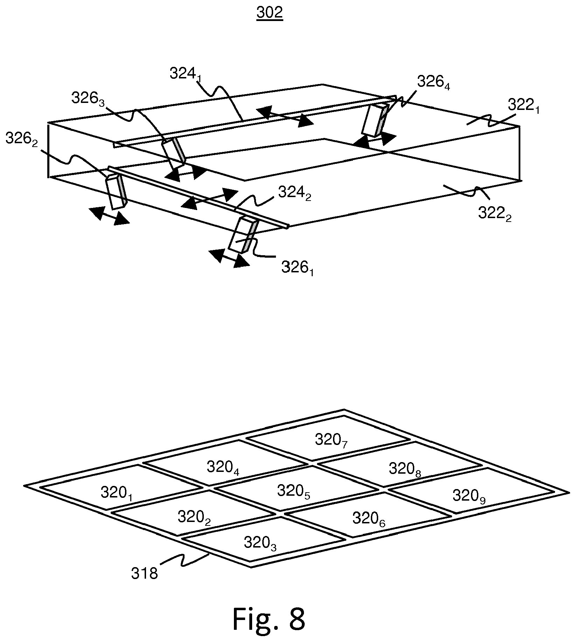

**Fig. 8** depicts a second embodiment of a Check Weight Cube (CWC) **302** for non-conveyables. The weighing system **318** of the CWC **302** comprises nine electronic scales **320₁₋₉**. The volume scanning system **322** comprises four movable cameras **326₁₋₄**. In this embodiment, the volume scanning system **322** comprises mounting frames **324** for mounting the movable cameras **326₁₋₄** so that the cameras **326₁₋₄** can be moved to different x,y positions in a plane parallel to the top surface of the scales **320₁₋₉**.

The plurality of scales **320₁₋₉** under the volume scanning system **322** can be controlled such that one or more of the scales of the plurality of scales **320₁₋₉** forms a scale for consignments of a particular size. Hence, the plurality of scales **320₁₋₉** can be configured into different scales of different sizes. This way, scanning of different consignments can be performed in parallel. Once the scanning process is finished, the data is transmitted to the server **151** of **Fig. 2****.** Different consignments may be loaded onto different scales of the plurality of scales **320₁₋₉** of the weighing system **318** of the CWC **302.** In that case, the weighing system **318** senses that a first consignment **306₁** is loaded onto four electronic scales **320_{1,2,4,5}** which are configured as a first combined scale for weighing the first consignment. Similarly, a second consignment **306₂** is loaded on two electronic scales **320₇₋₈** that are configured as a second combined scale for weighing the second consignment **306₂** and a third consignment **306₃** is loaded on a single electronic scale **320₉** for weighing the third consignment **306₃**.

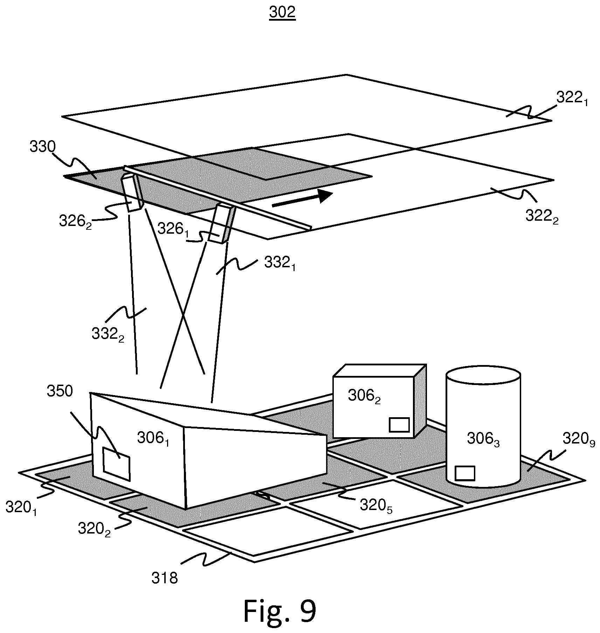

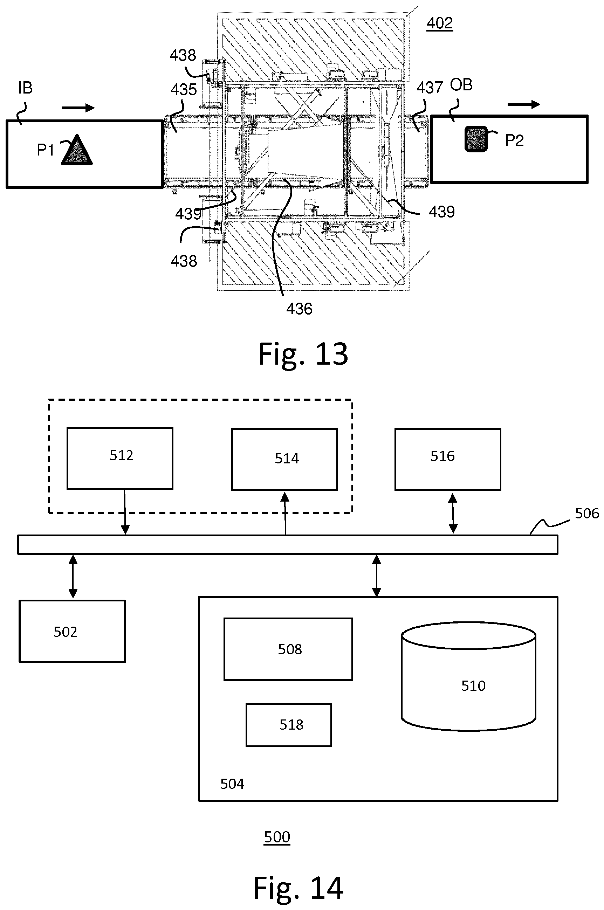

After the consignments have been loaded on the electronic scales, the weighing and scanning process is started. To that end, the first combined scale weighs the first consignment **306₁**. As the CWC **302** knows the position of the scales in the matrix it uses this information in order to define a scanning area **330**, see **Fig.9. Fig. 9** depicts cameras **326₁** and **326₂** moving to the right in order to perform a first scan of consignment **306₁** in scanning area **330** with the help of scanning beams **332₁** and **332₂.** **Fig. 13** depicts cameras **326₃** and **326₄** moving to the back in order to perform a second scan in scanning area **330** of consignment **306₁**. After the scans have been completed, the obtained information, i.e. the consignment ID, weight, size and/or shape are transmitted to the server **151** of **Fig.2****.**

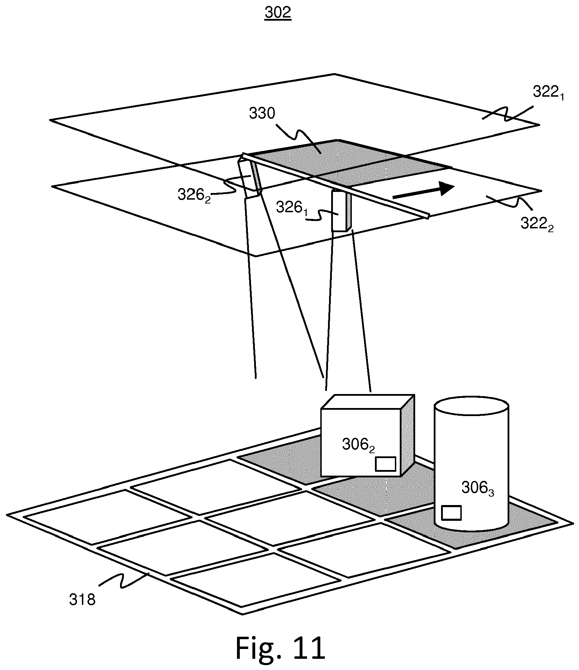

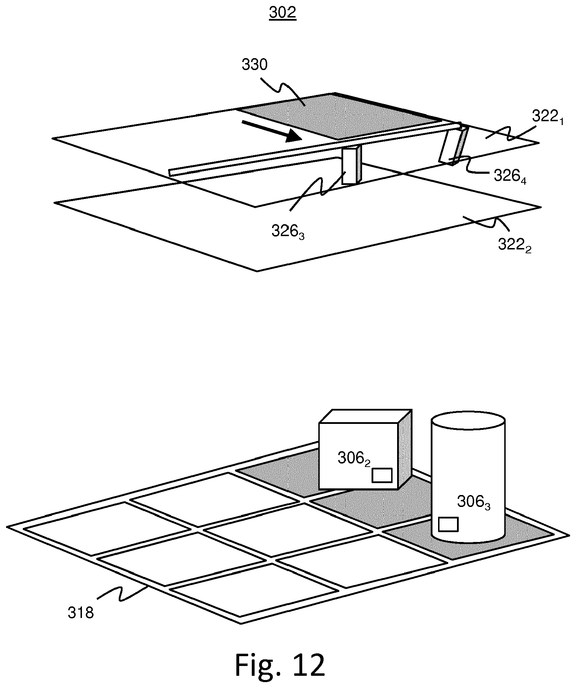

**Fig. 11** shows the consignment scanning being repeated for consignment **306₂**. **Fig. 12** shows the CWC **302** after both scans of consignment **306₂** have been completed. The CWC **302** may execute the loading, weighing, scanning and unloading process depicted in **Figs. 8** to **12** for multiple consignments in parallel (or at least partly in parallel). For example, during the weighing and scanning process of a first consignment **306₁** a second consignment **306₂** may be loaded onto scales that are not used for the weighing and scanning process of the first consignment **306₁**. Alternatively and/or in addition, during the weighing and scanning process of a first consignment **306₁** a third consignment **306₃** may be unloaded from the weighing system **318.**

**Fig. 13** depicts an embodiment of a Check Weight Cube (CWC) **402** for conveyable mail **pieces P1**, **P2**, i.e. mail pieces that can be transported over conveyor belts.

CWC **402** is located between an in-belt **IB** and an out-belt **OB** and comprises an in-feeder belt **435**, a scale belt **436** and an outfeeder belt **437.** Weight measurement is performed on scale belt **436** and may comprise a short stop of the scale belt **436**. Markings, e.g. bar codes, are identified using a camera-based identification system **438**, which allows markings to be identified from e.g. five sides (front, back, left, right, top). The camera-based identification system **438** may comprise five cameras, which may be equipped with illumination if necessary. Size measurement, e.g. of dimensions and/or volume, is performed using laser and/or ultrasound distance measurement devices **439**. Software may be used to calculate a three-dimensional volume shape of the mail piece as the smallest enclosing rectangular box in real time and may also be used to determine stackability of the mail piece. Output of the measurement devices **439** may also be provided to the camera-based identification system **438** to allow it to focus better on the consignment being scanned. A control system may be provided to ensure that mail pieces are fed into the measurement system with the correct gaps in between to allow appropriate measurement of the weight and size.

**Fig. 14** depicts a block diagram illustrating an exemplary data processing system that may perform the methods as described with reference to **Figs. 3** and **4****.**

As shown in **Fig. 14****,** the data processing system **500** may include at least one processor **502** coupled to memory elements **504** through a system bus **506.** As such, the data processing system may store program code within memory elements **504.** Further, the processor **502** may execute the program code accessed from the memory elements **504** via a system bus **506.** In one aspect, the data processing system may be implemented as a computer that is suitable for storing and/or executing program code. It should be appreciated, however, that the data processing system **500** may be implemented in the form of any system including a processor and a memory that is capable of performing the functions described within this specification.

The memory elements **504** may include one or more physical memory devices such as, for example, local memory **508** and one or more bulk storage devices **510.** The local memory may refer to random access memory or other non-persistent memory device(s) generally used during actual execution of the program code. A bulk storage device may be implemented as a hard drive or other persistent data storage device. The processing system **500** may also include one or more cache memories (not shown) that provide temporary storage of at least some program code in order to reduce the number of times program code must be retrieved from the bulk storage device **510** during execution.

Input/output (I/O) devices depicted as an input device **512** and an output device **514** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 14** with a dashed line surrounding the input device **512** and the output device **514**). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **516** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **500**, and a data transmitter for transmitting data from the data processing system **500** to said systems, devices and/or networks. Modems, cable modems, and Ethernet cards are examples of different types of network adapter that may be used with the data processing system **500.**

As pictured in **Fig. 14****,** the memory elements **504** may store an application **518.** In various embodiments, the application **518** may be stored in the local memory **508**, the one or more bulk storage devices **510,** or separate from the local memory and the bulk storage devices. It should be appreciated that the data processing system **500** may further execute an operating system (not shown in **Fig. 14**) that can facilitate execution of the application **518.** The application **518,** being implemented in the form of executable program code, can be executed by the data processing system **500**, e.g., by the processor **502.** Responsive to executing the application, the data processing system **500** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **502** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of calculating a price of transporting a consignment, comprising the steps of:
- receiving (171) a request from a customer to transport a consignment from an origin location to a destination location, said request comprising one or more indicated characteristics of said consignment;
- calculating (172) a first price of said transport based on at least said origin location, said destination location and at least one of said one or more indicated characteristics of said consignment;
- providing (173) said first price to said customer;
- allowing (174) said customer to accept an offer to transport said consignment for said first price;
- a measurement system determining (175) one or more measured characteristics of said consignment, said measured characteristics comprising a weight, a size and/or a shape of said consignment;
- a processor calculating (176) a second price of said transport based on at least said origin location, said destination location and at least one of said one or more measured characteristics of said consignment; and
- transmitting (177) a notification to said customer if said first price and said second price have at least a certain difference.

2. A method as claimed in claim 1, wherein the step of transmitting (177) a notification to said customer comprises transmitting said notification to said customer by SMS message, chat message, e-mail, notification message on a website, notification message delivered through an Application Program Interface and/or notification message in an application.

3. A method as claimed in any one of the preceding claims, further comprising the step of said measurement system capturing (181) one or more images of said consignment and the step of allowing (182) said customer to view at least one of said one or more images of said consignment.

4. A method as claimed in claim 3, wherein the step of said measurement system capturing (181) one or more images of said consignment comprises said measurement system capturing a plurality of images from different positions.

5. A method as claimed in any one of the preceding claims, further comprising the step of indicating (185) at least one of said weight, said size and said shape of said consignment to said customer.

6. A method as claimed in any one of the preceding claims, further comprising the step of allowing (186) said customer to stop said transport of said consignment.

7. A method as claimed in any one of the preceding claims, wherein the step of receiving (171) a request from a customer to transport a consignment comprises receiving said request on a website and/or in an application and the step of allowing (174) said customer to accept an offer to transport said consignment for said first price comprises allowing said customer to accept said offer on said website and/or in said application.

8. A method as claimed in any one of the preceding claims, further comprising the step of informing (178) said customer that said transport of said consignment is going to be charged at said second price.

9. A method as claimed in claim 8, wherein the step of informing (178) said customer that said transport of said consignment is going to be charged at said second price comprises informing said customer that said transport of said consignment is going to be charged at said second price on a website and/or in an application.

10. A method as claimed in any one of the preceding claims, further comprising the step of said measurement system determining (193) whether said consignment is stackable or not on the basis of said measured shape of said consignment and wherein the step of said processor calculating (176) said second price of said transport comprises said processor calculating (194) said second price based on at least said origin location, said destination location and whether said consignment is determined to be stackable or not.

11. A method as claimed in any one of the preceding claims, further comprising the step of a processor comparing (195) at least one of said measured characteristics of said consignment with at least one corresponding indicated characteristic of said consignment and wherein the step of said processor calculating (176) said second price of said transport is either performed or not performed in dependence on a result of said comparison.

12. A computer program or suite of computer programs comprising at least one software code portion or a computer program product storing at least one software code portion, the software code portion, when run on a computer system, being configured for performing the method of any one of claims 1 to 11.

13. A system (150) for calculating a price of transporting a consignment, comprising:
- a customer interface system (153);
- a measurement system (141-148) configured to determine one or more measured characteristics of a consignment, said measured characteristics comprising a weight, a size and/or a shape of said consignment; and
- at least one processor (161) configured to use said customer interface system (153) to receive a request from a customer to transport a consignment from an origin location to a destination location, said request comprising one or more indicated characteristics of said consignment, to calculate a first price of said transport based on at least said origin location, said destination location and at least one of said one or more indicated characteristics of said consignment, to use said customer interface system (153) to provide said first price to said customer and to allow said customer to accept an offer to transport said consignment for said first price, to calculate a second price of said transport based on at least said origin location, said destination location and at least one of said one or more measured characteristics of said consignment, and to use said customer interface system (153) to transmit a notification to said customer if said first price and said second price have at least a certain difference.
